# EUROPÄISCHE PATENTSCHRIFT

(11) **EP 3 787 932 B1**
(45) Veröffentlichungstag und Bekanntmachung des Hinweises auf die Patenterteilung: **01.09.2021**
(21) Anmeldenummer: 20754604.5
(22) Anmeldetag: 25.06.2020
(51) Int. Cl.: B60R 11/04, B60R 11/00

(54) **TRÄGERANORDNUNG FÜR EIN SENSORGEHÄUSE UMFASSEND EIN KLIPPELEMENT UND EIN WIDERLAGER**
CARRIER ARRANGEMENT FOR A SENSOR HOUSING COMPRISING A CLIP ELEMENT AND AN ABUTMENT
AGENCEMENT SUPPORT POUR UN BOÎTIER DE CAPTEUR COMPRENANT UN ÉLÉMENT D'ATTACHE ET UNE BUTÉE

(30) Priorität: 24.07.2019 LU 101336
(43) Veröffentlichungstag der Anmeldung: 10.03.2021
(73) Patentinhaber: PMA/TOOLS AG, 47877 Willich (DE)
(72) Erfinder: Lindsay-Neale, Robert, 40489 Düsseldorf (DE)
(86) Internationale Anmeldenummer: PCT/DE2020/100553
(87) Internationale Veröffentlichungsnummer: WO 2021/013291

(56) Entgegenhaltungen:
- EP-A1- 3 258 119
- DE-A1-102013 005 801
- DE-T5-112013 001 547
- FR-A1- 3 074 103
- US-A1- 2015 015 713

## Beschreibung

### Technisches Gebiet

Die Erfindung liegt auf dem Gebiet der Halterungen für Zubehör von Kraftfahrzeugen und betrifft Halterungen zur Befestigung an der Innenseite einer Fahrzeugscheibe zum Halten von Sensoreinrichtungen, insbesondere von Kameras sowie eine Anordnung umfassend eine Halterung für eine Sensoreinrichtung und eine Fahrzeugscheibe.

### Stand der Technik

Halterungen oder Trägervorrichtungen dienen der Verbindung von Komponenten von Fahrassistenzsystemen mit einer Scheibe, beispielsweise einer Windschutzscheibe, eines Kraftfahrzeugs. Diese Halterungen werden beispielsweise auf die Innenseite der Windschutzscheibe geklebt. Anschließend wird ein Sensor an dieser Halterung befestigt, beispielsweise eine Kamera, welcher Teil eines Fahrassistenzsystems sein kann. Darüber wird in der Regel eine entsprechend angepasste Abdeckung angebracht, die auch als "Beauty-Cover" bezeichnet wird.

Bei dem Sensor kann es sich um eine Kamera handeln mit einem Gehäuse, welches über seitlich abragende Fortsätze, insbesondere stabförmige Fortsätze, verfügt. Weiterhin können an dem Gehäuse Zapfen oder ähnliches vorhanden sein, die in eine hakenförmige Halterung der Trägervorrichtung eingreifen können, wie etwa in DE 11 2013 001 547 T5 und US 2015/0015713 A1 offenbart. Somit verfügt ein solches im Allgemeinen rechteckiges Sensorgehäuse an einem Ende über zwei stabförmige Fortsätze, die gegenüberliegend an je einer Seite des Gehäuses angebracht sind- Am anderen Ende des Gehäuses befinden sich dann Zapfen, die in entsprechende hakenförmige Halterungen eingreifen können.

Ein derartiges System gemäß dem Oberbegriff von Anspruch 1 wird beispielsweise in der Schrift EP 3 258 119 A1 offenbart. Hier werden die stabförmigen Fortsätze des Kameragehäuses in einer metallenen Federklammer, die auf einen entsprechend gestalteten Bereich der Halterung aufgeschoben wird, gehalten und fixiert. Zusätzlich sind hier am entgegengesetzten Ende des Kameragehäuses Füßchen vorgesehen, die in hakenförmige Halterungen eingreifen. Nachteilig ist hier die mehrteilige Ausführung mit einer metallenen Federklemme und einer in der Halterung vorgesehenen Haltevorrichtung für diese Federklemme. So muss bei der Herstellung dieser Halterung jeweils die Federklemme separat hergestellt, gehandhabt und schließlich an der entsprechenden Haltevorrichtung montiert werden. Ein weiterer Nachteil kann sich durch das Metall selbst ergeben, welches möglicherweise korrodiert oder aber entsprechend teuer ist.

In der Schrift DE 10 2013 005 801 A1 wird eine Halterung für Kameras zur Montage an einer Windschutzscheibe offenbart, die mit Klippelementen arbeitet. Hierbei werden die stabförmigen Fortsätze in ein Klippelement eingebracht und zusätzlich mit einem Sicherungshaken arretiert. Bei dem dort offenbarten System sind keine Zapfen und hakenförmige Halterungen vorgesehen. Vorteilhaft ist hier die mögliche einstückige Ausführung der Klippelemente. Nachteilig jedoch ist, dass auf Grund der Form der Klippelemente ein größerer Spalt zwischen den Schenkeln des Klippelements verbleibt, was einen zusätzlichen Sicherungshaken zur sicheren Fixierung der stabförmigen Fortsätze notwendig macht. Weiterhin nachteilig ist, dass der Abstand zwischen dem Klippelement und dem Kameragehäuse dadurch begrenzt wird, dass keine zu hohen Biegekräfte auf dem stabförmigen Fortsatz lasten dürfen, die zum Brechen des Fortsatzes führen könnten.

Die Schrift FR 3 074 103 A1 zeigt ebenfalls eine Trägeranordnung für Kameras zur Montage an eine Windschutzscheibe, wobei die Halterungen für die Kamera jeweils einstückig mit der Grundplatte der Trägeranordnung verbunden sind.

### Offenbarung der Erfindung

Das Ziel der vorliegenden Erfindung ist es, eine Halterung für ein Gehäuse einer Sensorvorrichtung zur Befestigung an einer Windschutzscheibe bereitzustellen, die kostengünstig herstellbar ist und eine sichere und dauerhafte Fixierung bei gleichzeitig vereinfachter Montage der Sensorvorrichtung erlaubt.

Dieses technische Problem wird durch die Merkmale der Erfindung im kennzeichnenden Teil des Anspruchs 1 gelöst. Weitere Merkmale vorteilhafter Ausführungsformen sind in den abhängigen Ansprüchen enthalten.

Eine erfindungsgemäße Trägervorrichtung dient der Befestigung eines Sensors, der Teil eines Fahrassistenzsystems sein kann, an einer Scheibe eines Kraftfahrzeugs. Die Trägervorrichtung umfasst eine Grundplatte, welche an einer Innenseite einer Fahrzeugscheibe etwa durch Verkleben festlegbar ist, und eine Traganordnung zum Halten wenigstens eines Gehäuses einer Sensorvorrichtung. Diese Traganordnung umfasst zumindest ein Klippelement, welches zum Fixieren einer an einem ersten Ende eines Gehäuses einer Sensorvorrichtung angeordneten stabförmigen Komponente ausgebildet ist, welche von dem Gehäuses abragt. Bei der Sensorvorrichtung kann es sich beispielsweise um eine Kamera handeln. Insoweit werden die Begriffe Sensor, Sensorvorrichtung und Kamera synonym verwendet.

Das erfindungsgemäße Klippelement umfasst zwei Schenkel, die von der Grundplatte abragen und mit dieser bevorzugt stoffschlüssig verbunden sein können. Die der Grundplatte fernen Enden der Schenkel begrenzen einen Einführbereich für die stabförmige Komponente des Sensorgehäuses. In Richtung der Grundplatte schließt sich ein Aufnahmeraum des Klippelements an, in welchen die stabförmige Komponente bei der Montage nach Durchlaufen des Einführbereichs in Richtung Grundplatte gelangt. In einer bevorzugten Ausführungsform sind die Schenkel selbst schräg zueinander hingeneigt und verfügen optional zusätzlich in ihrem oberen Drittel über Einführschrägen für die stabförmige Komponente des Sensorgehäuses.

Der Aufnahmeraum wird seitlich durch die in diesem Bereich mit konkaven Aufnahmekonturen versehenen Schenkel begrenzt. "Seitlich" ist hier definiert als quer zu einer axialen Erstreckungsrichtung der stabförmigen Komponente einer montierten Sensorvorrichtung und zugleich quer zu einer Normalen auf der Grundplatte der Trägervorrichtung. Weiterhin können in diesem Bereich, wie zuvor dargestellt, die Schenkel schräg zueinander angeordnet sein.

Die erfindungsgemäße Trägervorrichtung umfasst weiterhin ein an der Grundplatte angeordnetes Widerlager für die stabförmige Komponente des Gehäuses, welches bei montierter Sensorvorrichtung auf der dem Gehäuse zugewandten Seite des Klippelements angeordnet und mit der Grundplatte insbesondere stoffschlüssig verbunden ist. Das Widerlager kann auch aus mehreren, beispielsweise aus mindestens zwei Widerlagerelementen bestehen. Die Widerlagerelemente sind im Wesentlichen unabhängig voneinander und jeweils, optional einstückig, mit der Grundplatte verbunden. Das Widerlager oder zumindest eines der Widerlagerelemente kann in einem mit der Sensorvorrichtung montierten Zustand vollständig zwischen dem Gehäuse und der dem Gehäuse zugewandten Seite des Klippelements angeordnet sein. Das Widerlager weist an seinem von der Grundplatte abgewandten Ende einen insbesondere konkav ausgebildeten Auflagebereich zur Auflage der stabförmigen Komponente auf.

Der Auflagebereich des Widerlagers ist idealerweise bei Betrachtung in einer zur Grundplatte senkrechten Richtung etwa auf Höhe des unteren Endes des Aufnahmeraums des Klippelements angeordnet. Das Widerlager dient der Abstützung der stabförmigen Komponente des Gehäuses und kann so ein Durchbiegen oder einen Bruch dieser Komponente verhindern.

In einer bevorzugten Ausführungsform umfasst die Traganordnung auch eine Positioniereinrichtung für die stabförmige Komponente. Diese ist insbesondere stoffschlüssig mit der Grundplatte verbunden und befindet sich auf der dem Widerlager abgewandten Seite des Klippelements. Die Positioniereinrichtung kann mit dem freien Ende der stabförmigen Komponente des Gehäuses zusammenwirken. Durch eine im oberen Drittel angeordnete schräge Führungsfläche kann sie zusätzlich der zielgenauen Einführung der stabförmigen Komponente in das Klippelement, und damit des Gehäuses der Sensorvorrichtung in die Traganordnung, dienen. Weiterhin kann sie der zusätzlichen Fixierung der stabförmigen Komponente dienen, um eine Relativbewegung zwischen dem Klippelement und der stabförmigen Komponente in der axialen Erstreckungsrichtung der stabförmigen Komponente zu verhindern. Die Positioniereinrichtung gestattet damit zusammen mit dem Klippelement und dem Widerlager insgesamt eine positionsgenaue Montage und Fixierung der Kamera.

Die Traganordnung der erfindungsgemäßen Trägervorrichtung kann weiterhin über mindestens einen Zapfenhalter verfügen. Dieser Zapfenhalter ist derart ausgebildet, dass er einen an einem dem ersten Ende des Gehäuses der Sensorvorrichtung abgewandten zweiten Ende des Gehäuses angeordneten Zapfen hakenartig hintergreifen kann, beispielsweise indem der hakenförmige Teil des Zapfenhalters einen Teil des Zapfens umschließen und/oder in eine entsprechende Vertiefung des Zapfens eingreifen kann. Der Zapfenhalter ist bevorzugt stoffschlüssig mit der Grundplatte verbunden.

Weiterhin kann die Grundplatte der erfindungsgemäßen Trägervorrichtung mit dem Klippelement und optional mit dem Widerlager und optional mit mindestens einer Positioniereinrichtung und/oder mit mindestens einem Zapfenhalter einstückig ausgeführt sein.

Zudem kann eine Traganordnung einer erfindungsgemäßen Trägervorrichtung über zwei oder mehr Klippelemente verfügen, mit denen das Gehäuse, zumindest das erste Ende des Gehäuses, an der Traganordnung festgelegt wird. Jedem der Klippelemente kann ein Widerlager und optional eine Positioniereinrichtung zugeordnet sein. Diese dienen der Aufnahme der jeweiligen stabförmigen Komponente, welche von der Wandung des Gehäuses abragen.

Weiterhin kann die Traganordnung entsprechend auch zwei oder mehr Zapfenhalter umfassen, die so angeordnet sind, dass sie jeweils einen an dem Sensorgehäuse, zumindest an dessen zweitem Ende, angeordneten Zapfen zum Teil hintergreifen, umgreifen oder in diesen eingreifen können.

Die zuvor beschriebene erfindungsgemäße Trägervorrichtung kann an der Scheibe, bevorzugt der Windschutzscheibe eines Kraftfahrzeuges festgelegt werden, etwa durch Verkleben mit dieser. Entsprechend liegt auch eine Anordnung umfassend eine Fahrzeugscheibe, bevorzugt eine Windschutzscheibe, und eine erfindungsgemäße Trägervorrichtung im Rahmen der Erfindung.

Weitere Merkmale und Vorteile der Erfindung sind Gegenstand der nachfolgenden Beschreibung und der zeichnerischen Darstellung bevorzugter, jedoch nicht begrenzender Ausführungsbeispiele.

### Kurze Beschreibung der Zeichnungen

Dabei zeigt die
**Figur 1** eine erfindungsgemäße Trägervorrichtung,
**Figur 2** die Trägervorrichtung gemäß Figur 1 mit einem gestrichelt dargestellten Sensorgehäuse vor dessen Montage,
**Figur 3** ein Sensorgehäuse in perspektivischer Seitenansicht,
**Figur 4** eine vergrößerte Darstellung des Klippelements und des Widerlagers der Trägervorrichtung gemäß Figur 1,
**Figur 5** eine vergrößerte Darstellung der Traganordnung der Trägervorrichtung gemäß Figur 1,

### Beschreibung der Ausführungsarten

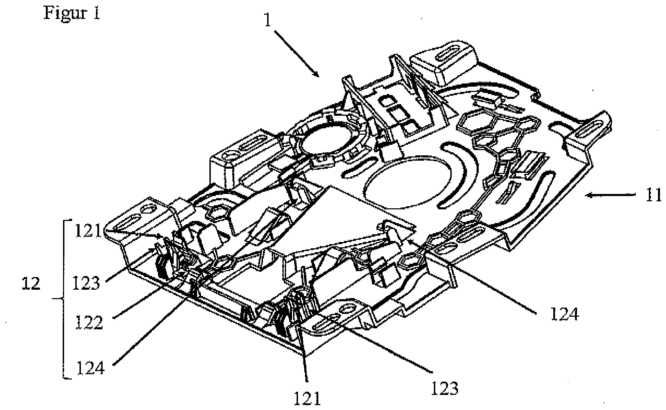

Die Figur 1 zeigt eine erfindungsgemäße Trägervorrichtung (1) zur Befestigung an einer Scheibe eines Kraftfahrzeugs. Sie umfasst eine Grundplatte (11) und eine Traganordnung (12) für ein Sensorgehäuse (2), welche hier durch Klippelemente (121), Widerlager (122), Positioniereinrichtungen (123) und Zapfenhalter (124) gebildet ist. Das Widerlager (122) umfasst voneinander unabhängige Widerlagerelemente und liegt vollständig auf der dem zu montierenden Gehäuse zugewandten Seite des Klippelements.

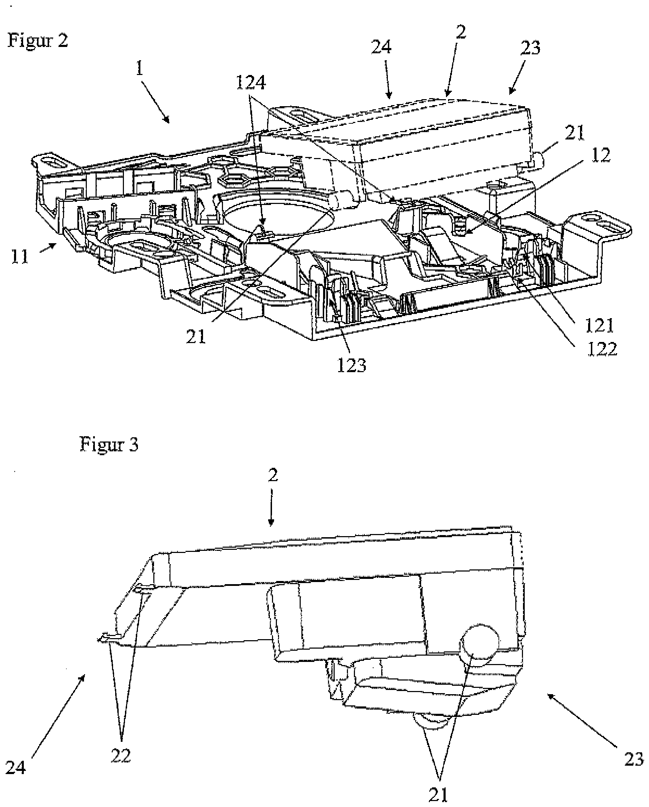

Die Figur 2 zeigt eine erfindungsgemäße Trägervorrichtung (1) und ein gestrichelt dargestelltes Sensorgehäuse (2) vor dessen Montage. Die Merkmale der Trägervorrichtung (1) entsprechen denen der Figur 1. Gut erkennbar sind hier die zwei stabförmigen Komponenten (21), welche an einem ersten Ende (23) des Gehäuses (2) angeordnet sind. Die an einem von dem ersten Ende abgewandten zweiten Ende (24) des Gehäuses angeordneten Zapfen (22) sind in dieser Ansicht nicht erkennbar.

Figur 3 zeigt ein beispielhaftes Sensorgehäuse (2) in einer perspektivischen Seitenansicht. Das Gehäuse (2) verfügt über zwei stabförmige Komponenten (21), die an dem ersten Ende (23) des Gehäuses (2) angeordnet sind. Weiterhin sind an dem zweiten Ende (24) des Gehäuses (2) zwei Zapfen (22) angeordnet.

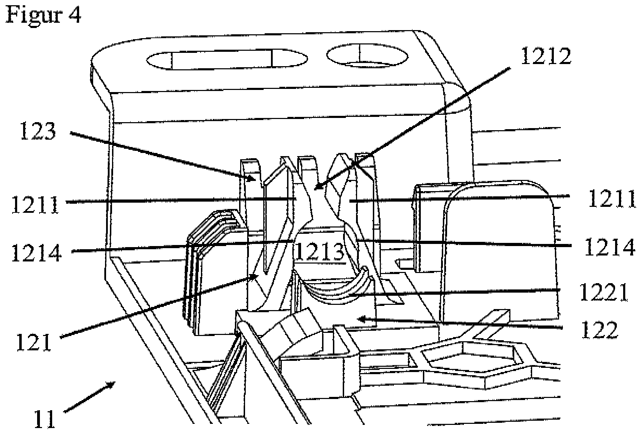

Die Figur 4 zeigt ein erfindungsgemäßes Klippelement (121) mit einem Widerlager (122). Die zwei Schenkel (1211) des Klippelements (121) ragen schräg zueinander von der Grundplatte (11) ab. Der Einführbereich (1212) für die stabförmige Komponente (21) wird durch die Enden der zwei Schenkel (1211) begrenzt. An den Einführbereich (1212) schließt sich in Richtung der Grundplatte (11) der Aufnahmeraum (1213) für die stabförmige Komponente (21) an, welcher durch konkav geformte Aufnahmekonturen (1214) der zwei Schenkel (1211) begrenzt wird. In den Figuren 4a und 4b ist in Blickrichtung vor dem Klippelement (121) ein Widerlager (122) angeordnet. Das Widerlager (122) umfasst zwei voneinander unabhängige Widerlagerelemente. Es ist, bei montiertem Sensorgehäuse, vollständig auf der dem Sensorgehäuse zugewandten Seite des Klippelements (121) angeordnet und weist einen bevorzugt konkaven Auflagebereich (1221) auf, welcher einen Auflageabschnitt der stabförmigen Komponente (21) abstützen kann. In Blickrichtung hinter dem Klippelement (121), also auf der von dem Widerlager (122) abgewandten Seite des Klippelements (121), ist eine Positioniereinrichtung (123) angeordnet.

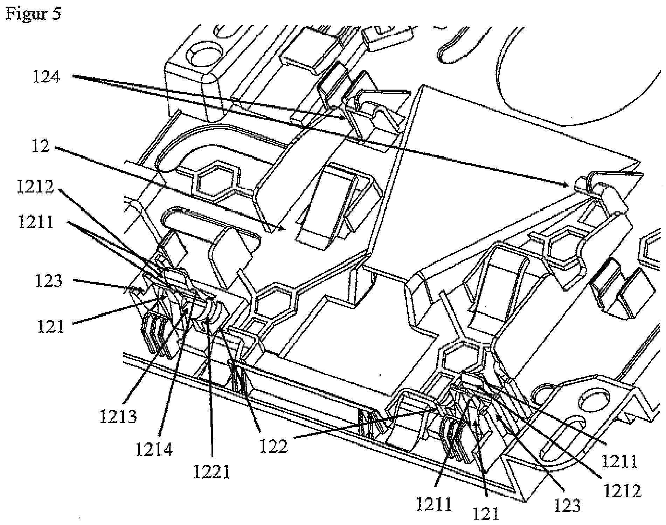

Die Figur 5 zeigt eine vergrößerte Darstellung des Bereiches der Trägervorrichtung (1), der die Traganordnung (12) zur Aufnahme des Sensorgehäuses (2) bildet. Wie bereits mit Bezug auf die Figuren 1 und 4 beschrieben, finden sich hier zwei Klippelemente (121), denen jeweils ein Widerlager (122) und eine Positioniereinrichtung (123) zugeordnet sind. Das Widerlager (122) liegt vollständig auf der dem zu montierenden Gehäuse zugewandten Seite des Klippelements und umfasst zwei voneinander unabhängige Widerlagerelemente. Weiterhin sind zwei Zapfen halter (124) vorgesehen, die die Zapfen (22) an dem zweiten Ende (24) des Sensorgehäuses (2), wie in Figur 3 dargestellt, hakenförmig hintergreifen können.

In den Figuren werden folgende Bezugszeichen verwendet:

| | |
|---|---|
| 1 | Trägervorrichtung |
| 11 | Grundplatte |
| 12 | Traganordnung |
| 121 | Klippelement |
| 1211 | Schenkel |
| 1212 | Einführbereich |
| 1213 | Aufnahmeraum |
| 1214 | konkav geformte Aufnahmekontur |
| 122 | Widerlager |
| 1221 | konkaver Auflagebereich |
| 123 | Positioniereinrichtung |
| 124 | Zapfenhalter |
| 2 | Sensorgehäuse |
| 21 | stabförmige Komponente |
| 22 | Zapfen |
| 23 | erstes Ende des Sensorgehäuses |
| 24 | zweites Ende des Sensorgehäuses |

## Patentansprüche

1. Trägervorrichtung (1) zur Befestigung an einer Scheibe eines Kraftfahrzeugs, umfassend eine an der Scheibe festlegbare Grundplatte (11) und eine Traganordnung (12), welche zum Halten wenigstens eines Gehäuses (2) einer Sensorvorrichtung, insbesondere einer Kamera, ausgebildet ist und zumindest ein Klippelement (121) umfasst, welches zum Fixieren einer an einem ersten Ende des Gehäuses (23) der Sensorvorrichtung angeordneten stabförmigen Komponente (21) ausgebildet ist, wobei das Klippelement (121) aus zwei Schenkeln (1211) gebildet ist, welche von der Grundplatte (11) abragen, wobei die der Grundplatte (11) fernen Enden der Schenkel (1211) einen Einführbereich (1212) für die stabförmige Komponente (21) begrenzen, an welchen sich in Richtung der Grundplatte (11) ein Aufnahmeraum (1213) anschließt, dessen seitliche Begrenzung durch eine in diesem Bereich konkav ausgebildete Aufnahmekontur (1214) der Schenkel (1211) gebildet wird, und wobei an der Grundplatte (11) zumindest ein Widerlager (122) angeordnet ist, welches einen insbesondere konkaven Auflagebereich (1221) zur Abstützung der stabförmigen Komponente (21) aufweist, **dadurch gekennzeichnet, dass** das Widerlager (122) in einem mit der Sensorvorrichtung montierten Zustand auf der dem Gehäuse (2) zugewandten Seite des Klippelements (121) angeordnet ist.

2. Trägervorrichtung nach Anspruch 1, **dadurch gekennzeichnet, dass** das Widerlager (122) in einem mit der Sensorvorrichtung montierten Zustand vollständig zwischen dem Gehäuse (2) und der dem Gehäuse (2) zugewandten Seite des Klippelements (121) angeordnet ist.

3. Trägervorrichtung nach Anspruch 1, **dadurch gekennzeichnet, dass** das Widerlager (122) mindestens zwei Widerlagerelementen umfasst.

4. Trägervorrichtung nach Anspruch 3, **dadurch gekennzeichnet, dass** mindestens ein Widerlagerelement in einem mit der Sensorvorrichtung montierten Zustand vollständig zwischen dem Gehäuse (2) und der dem Gehäuse (2) zugewandten Seite des Klippelements (121) angeordnet ist.

5. Trägervorrichtung nach einem der vorhergehenden Ansprüche, **dadurch gekennzeichnet, dass** die zwei Schenkel (1211) des mindestens einen Klippelements (121) schräg zueinander hingeneigt von der Grundplatte (11) abragen, wobei die der Grundplatte fernen Enden über Einführschrägen verfügen, welche den Einführbereich (1212) begrenzen.

6. Trägervorrichtung nach einem der vorhergehenden Ansprüche, **dadurch gekennzeichnet, dass** die Traganordnung (12) zusätzlich eine auf der von dem Widerlager (122) abgewandten Seite des Klippelements angeordnete Positioniereinrichtung (123) umfasst, welche mit einem freien Ende der stabförmigen Komponente (21) zusammenwirken kann.

7. Trägervorrichtung nach einem der vorhergehenden Ansprüche, **dadurch gekennzeichnet, dass** die Traganordnung (12) zusätzlich zumindest einen von der Grundplatte (11) abragenden Zapfenhalter (124) umfasst, der derart ausgebildet ist, dass er einen an einem dem ersten Ende abgewandten zweiten Ende des Gehäuses (24) angeordneten Zapfen (22) hakenartig hintergreifen kann.

8. Trägervorrichtung nach einem der vorhergehenden Ansprüche, **dadurch gekennzeichnet, dass** die Grundplatte (11) und das mindestens eine Klippelement (121) einstückig ausgeführt sind.

9. Trägervorrichtung nach einem der vorhergehenden Ansprüche, **dadurch gekennzeichnet, dass** die Grundplatte (11) und das mindestens eine Widerlager (122) einstückig ausgeführt sind.

10. Trägervorrichtung nach einem der Ansprüche 6 bis 9, **dadurch gekennzeichnet, dass** die Grundplatte (11) und die Positioniereinrichtung (123) einstückig ausgeführt sind.

11. Trägervorrichtung nach einem der Ansprüche 7 bis 10, **dadurch gekennzeichnet, dass** die Grundplatte (11) und der mindestens eine Zapfenhalter (124) einstückig ausgeführt sind.

12. Anordnung umfassend eine Fahrzeugscheibe und eine Trägervorrichtung (1) nach einem der vorherigen Ansprüche.

## Claims

1. A carrier device (1) for attachment to a window pane of a motor vehicle, comprising a base plate (11) fixedly attachable to the window pane, and a carrying arrangement (12) configured for holding at least a housing (2) of a sensor device, in particular of a camera, and including at least one clip element (121) configured for retaining a rod-shaped component (21) disposed at a first end of the housing (23) of the sensor device, wherein the clip element (121) is formed by two legs (1211) extending from the base plate (11), the ends of the legs (1211) remote from the base plate (11) defining an entry region (1212) for the rod-shaped component (21), the entry region (1212) being adjoined, in a direction toward the base plate (11), by a receiving space (1213) which is laterally bounded by concavely shaped receiving contours (1214) formed in the two legs (1211) in this region, wherein the base plate (11) has at least one counter-bearing (122) disposed thereon which has an, in particular concavely shaped, support region (1221) for supporting the rod-shaped component (21), **characterized in that** the counter-bearing (122) is located on the side of the clip element (121) adjacent the housing (2), when the sensor device is in a mounted position.

2. The carrier device according to claim 1, **characterized in that** the counter-bearing (122) is located completely between the housing (2) and the side of the clip element (121) adjacent the housing (2) when the sensor device is in a mounted position.

3. The carrier device according to claim 1, **characterized in that** the counter-bearing (122) includes at least two counter-bearing elements.

4. The carrier device according to claim 3, **characterized in that** at least one counter-bearing element is located completely between the housing (2) and the side of the clip element (121) adjacent the housing (2) when the sensor device is in a mounted position.

5. The carrier device according to any of the preceding claims, **characterized in that** the two legs (1211) of the at least one clip element (121) extend from the base plate (11) at an angle relative to each other, the ends remote from the base plate having entry bevels defining the entry region (1212).

6. The carrier device according to any of the preceding claims, **characterized in that** the carrying arrangement (12) additionally comprises a positioning device (123) disposed on the side of the clip element opposite the counter-bearing (122) and capable of interacting with a free end of the rod-shaped component (21).

7. The carrier device according to any of the preceding claims, **characterized in that** the carrying arrangement (12) additionally comprises at least one protrusion holder (124) which extends from the base plate (11) and is configured to be capable of engaging in a hook-like manner behind a protrusion (22) disposed at a second end of the housing (24) opposite the first end.

8. The carrier device according to any of the preceding claims, **characterized in that** the base plate (11) and the at least one clip element (121) are integrally formed in one piece.

9. The carrier device according to any of the preceding claims, **characterized in that** the base plate (11) and the at least one counter-bearing (122) are integrally formed in one piece.

10. The carrier device according to any of claims 6 through 9, **characterized in that** the base plate (11) and the positioning device (123) are integrally formed in one piece.

11. The carrier device according to any of claims 7 through 10, **characterized in that** the base plate (11) and the at least one protrusion holder (124) are integrally formed in one piece.

12. An assembly comprising a vehicle window and a carrier device (1) according to any of the preceding claims.

## Revendications

1. Dispositif support (1) destiné à être attaché à une vitre d'un véhicule automobile, comprenant une plaque de base (11) pouvant être fixée à la vitre et un agencement porteur (12), qui est configuré pour le maintien d'au moins un boîtier (2) d'un dispositif capteur, notamment d'une caméra, et au moins un élément clip (121), qui est configuré pour la fixation d'un composant (21) en forme de tige agencé à une première extrémité du boîtier (23) du dispositif capteur, l'élément clip (121) étant formé par deux branches (1211) qui font saillie de la plaque de base (11), les extrémités, éloignées de la plaque de base (11), des branches (1211) délimitant une zone d'introduction (1212) pour le composant (21) en forme de tige, à laquelle un espace de réception (1213) se raccorde en direction de la plaque de base (11), dont la délimitation latérale est formée par un contour de réception (1214) des branches (1211), configuré sous forme concave dans cette zone, et au moins un contre-appui (122) étant agencé sur la plaque de base (11), lequel comprend une zone d'appui (1221) notamment concave pour le soutien du composant (21) en forme de tige, **caractérisé en ce que** le contre-appui (122) est agencé dans un état monté avec le dispositif capteur sur le côté tourné vers le boîtier (2) de l'élément clip (121).

2. Dispositif support selon la revendication 1, **caractérisé en ce que** le contre-appui (122) est agencé dans un état monté avec le dispositif capteur entièrement entre le boîtier (2) et le côté tourné vers le boîtier (2) de l'élément clip (121).

3. Dispositif support selon la revendication 1, **caractérisé en ce que** le contre-appui (122) comprend au moins deux éléments de contre-appui.

4. Dispositif support selon la revendication 3, **caractérisé en ce que** dans un état monté avec le dispositif capteur, au moins un élément de contre-appui est agencé entièrement entre le boîtier (2) et le côté tourné vers le boîtier (2) de l'élément clip (121).

5. Dispositif support selon l'une quelconque des revendications précédentes, **caractérisé en ce que** les deux branches (1211) de l'au moins un élément clip (121) font saillie de la plaque de base (11) de manière inclinée en biais l'une vers l'autre, les extrémités éloignées de la plaque de base disposant de biais d'introduction, qui délimitent la zone d'introduction (1212) .

6. Dispositif support selon l'une quelconque des revendications précédentes, **caractérisé en ce que** l'agencement porteur (12) comprend en outre un appareil de positionnement (123) agencé sur le côté détourné du contre-appui (122) de l'élément clip, qui peut coopérer avec une extrémité libre du composant (21) en forme de tige.

7. Dispositif support selon l'une quelconque des revendications précédentes, **caractérisé en ce que** l'agencement porteur (12) comprend en outre au moins un porte-tenon (124) faisant saillie de la plaque de base (11), qui est configuré de telle sorte qu'il peut venir en prise par derrière à la manière d'un crochet avec un tenon (22) agencé à une deuxième extrémité du boîtier (24) détournée de la première extrémité.

8. Dispositif support selon l'une quelconque des revendications précédentes, **caractérisé en ce que** la plaque de base (11) et l'au moins un élément clip (121) sont réalisés d'un seul tenant.

9. Dispositif support selon l'une quelconque des revendications précédentes, **caractérisé en ce que** la plaque de base (11) et l'au moins un contre-appui (122) sont réalisés d'un seul tenant.

10. Dispositif support selon l'une quelconque des revendications 6 à 9, **caractérisé en ce que** la plaque de base (11) et l'appareil de positionnement (123) sont réalisés d'un seul tenant.

11. Dispositif support selon l'une quelconque des revendications 7 à 10, **caractérisé en ce que** la plaque de base (11) et l'au moins un porte-tenon (124) sont réalisés d'un seul tenant.

12. Agencement comprenant une vitre de véhicule et un dispositif support (1) selon l'une quelconque des revendications précédentes.
